# EUROPEAN PATENT APPLICATION

(11) **EP 2 907 842 A1**
(43) Date of publication of application: **19.08.2015**
(21) Application number: 13809387.7
(22) Date of filing: 26.06.2013
(51) Int. Cl.: C08L 21/00, B32B 25/04, C08L 101/00

(54) **ADHESIVE COMPOSITION AND ADHESIVE FOAM SHEET**

(30) Priority: 27.06.2012 JP 2012143909
(71) Applicant: Sika Technology AG, 6340 Baar (CH)
(72) Inventor: YAMADA, Shunsuke, Kanagawa 2540021 (JP)
(74) Representative: Sika Patent Attorneys
(86) International application number: PCT/JP2013/067469
(87) International publication number: WO 2014/003043

(57) **Abstract**

The present invention relates to an adhesive composition, including: 100 parts by weight (mass) of an unvulcanized rubber; and from 20 to 100 parts by weight (mass) of an adhesive hydrocarbon-based resin with a softening point of 40°C or less, as well as relates to an adhesive foamable sheet including: an adhesive layer including the adhesive composition mentioned above; and a foamable rubber layer including a foaming agent, a curing agent, and an unvulcanized rubber. The adhesive composition of the present invention has both good adhesive properties and processability, and can form an adhesive layer in which cold-flow is controlled. In addition, in the adhesive foamable sheet of the present invention, cold-flow can be controlled.

## Description

### TECHNICAL FIELD

Priority is claimed on Japanese Patent Application No. 2012-143909, filed on June 27, 2012, the content of which is incorporated herein by reference.

The present invention relates to an adhesive composition, and in addition, also relates to an adhesive foamable sheet based on the adhesive composition.

### BACKGROUND ART

Conventionally, a rubber-based foamed material fills a cavity in a motor vehicle body in order to satisfy requirements for noise-reducing performance in a vehicle interior or the like. Such a rubber-based foamed material is generally formed by adhering an unfoamed thermosetting foamable sheet in which a foaming agent, a curing agent (vulcanizing agent) and the like are added to an unvulcanized rubber, to an interior wall of a hollowed part of steel plates for a motor vehicle body, which constitute the cavity mentioned above in a motor vehicle body, and thermosetting and foaming the sheet, for example, in a dry-heating step on an electrodeposition coating line or the like. The thermosetting foamable sheet mentioned above is usually in the form of a laminate in which adhesive layers are laminated in order to prevent dropping of the sheet from the steel plate for a motor vehicle body after the sheet is adhered to the aforementioned interior wall. Such a thermosetting foamable sheet is described in, for example, JP-B-H07-119399.

The laminate types of thermosetting foamable sheets mentioned above are produced, subsequently packed in a stacked manner and stored in a warehouse or the like until they are used. For this reason, if they are left for a long period of time, the adhesive in the adhesive layers may be protruded from the side surfaces of the thermosetting foamable sheets due to weight bearing from the upper side, resulting in the integration of the sheets with the adjacent sheets or the adhesion of the sheets to the package container. Thereby, the handling properties may be degraded. The aforementioned tendency increases as the applied period of load increases. In particular, the tendency is remarkably observed during transportation or in the case of storing the layered products in a stacked manner in a warehouse or the like. Such a phenomenon is called cold-flow, and in order to control the cold-flow, measures such as reduction of the amount of oil in an adhesive layer, increase of the amount of a filler, and the like are taken. However, the reduction of the amount of the oil and increase of the amount of the filler cause deterioration of processability and adhesive properties of an adhesive composition forming the adhesive layer. On the other hand, if a large amount of oil is blended in order to improve the adhesive properties and processability, the cold-flow property tends to increase.

Japanese Unexamined Patent Application, First Publication No. 2006-206454 describes that cold-flow is controlled by adding a styrene-based thermoplastic elastomer, but fails to disclose the means for achieving both good processability and adhesive properties.

### Prior Art Documents

### Patent Documents

Patent Document 1: Japanese Examined Patent Application, Second Publication No. H07-119399
Patent Document 2: Japanese Unexamined Patent Application, First Publication No. 2006-206454

### SUMMARY OF INVENTION

### Technical Problems

The present invention has been made in view of the problems mentioned above. The present invention has a first object of providing an adhesive composition which has both good adhesive properties and processability, and is capable of forming an adhesive layer in which cold-flow is controlled. The present invention has a second object of providing an adhesive foamable sheet in which cold-flow is controlled and which has an adhesive layer formed from the adhesive composition mentioned above.

### Technical Solution

The first object of the present invention can be achieved by an adhesive composition, including:
100 parts by weight (mass) of an unvulcanized rubber; and
from 20 to 100 parts by weight (mass) of an adhesive hydrocarbon-based resin with a softening point of 40°C or less.

The adhesive hydrocarbon-based resin preferably includes at least one selected from the group consisting of coumarone resins, aliphatic petroleum resins, aromatic petroleum resins, aliphatic/aromatic copolymerization system petroleum resins, terpene resins, rosin resins, and phenolic resins.

The unvulcanized rubber is preferably selected from the group consisting of natural rubber, isoprene rubber, butadiene rubber, styrene butadiene rubber, butyl rubber, and end-denatured rubbers thereof obtained by denaturing the ends of the rubbers mentioned above.

The second object of the present invention can be achieved by an adhesive foamable sheet including:
an adhesive layer including the aforementioned adhesive composition; and
a foamable rubber layer including a foaming agent, a curing agent, and an unvulcanized rubber.

The foamable rubber layer mentioned above has the foaming volume ratio which is preferably 500% or more.

The foaming agent is preferably selected from the group consisting of azodicarbonamide, azobisisobutyronitrile, barium azodicarboxylate, N,N'-dinitrosopentamethylenetetramine, N,N'-dimethyl-N,N'-dinitrosoterephthalamide, 4,4'-oxybis(benzenesulfonyl hydrazide), hydrazodicarbonamide, paratoluenesulfonyl hydrazide, diphenylsulfone-3,3'-disulfonyl hydrazide, allyl bis(sulfonyl hydrazide), p-toluylenesulfonyl semicarbazide, 4,4'-oxybis(benzenesulfonyl semicarbazide), sodium hydrogencarbonate, ammonium carbonate, and anhydrous sodium nitrate.

The curing agent mentioned above is preferably sulfur or a sulfur-based curing agent.

The unvulcanized rubber mentioned above is preferably selected from the group consisting of natural rubber, isoprene rubber, butadiene rubber, styrene butadiene rubber, butyl rubber, and end-denatured rubbers thereof obtained by denaturing the ends of the rubbers mentioned above.

The adhesive foamable sheet of the present invention is preferably in the form of a hexahedron having a top surface, a bottom surface and four side surfaces.

### Effects of the Invention

The adhesive composition of the present invention possesses both good adhesive properties and processability, and can form an adhesive layer in which cold-flow is controlled.

When the adhesive hydrocarbon-based resin in the adhesive composition of the present invention includes at least one selected from the group consisting of coumarone resins, aliphatic petroleum resins, aromatic petroleum resins, aliphatic/aromatic copolymerization system petroleum resins, terpene resins, rosin resins, and phenolic resins, the adhesive properties and processability are further improved, and an adhesive layer in which cold-flow is controlled can be formed.

When the unvulcanized rubber in adhesive composition of the present invention is selected from the group consisting of natural rubber, isoprene rubber, butadiene rubber, styrene butadiene rubber, butyl rubber, and end-denatured rubbers thereof obtained by denaturing the ends of the rubbers mentioned above, the adhesive properties and processability are further improved, and an adhesive layer in which cold-flow is controlled can be formed.

In the adhesive foamable sheet of the present invention, cold-flow can be controlled. Therefore, even if the adhesive foamable sheets are left in a stacked manner for a long period of time, it can be prevented or reduced that the adhesive in the adhesive layers may be protruded from the side surfaces of the thermosetting foamable sheets due to weight bearing from the upper side, resulting in the integration of the sheets with the adjacent sheets or the adhesion of the sheets to the package container, and thereby, the handling properties may be degraded.

The adhesive foamable sheet of the present invention has a foamable rubber layer including a foaming agent, a curing agent, and an unvulcanized rubber, and for this reason, thermosetting properties and foaming properties can be provided. Therefore, the adhesive foamable sheet of the present invention can be foamed and cured by means of heating.

When the foaming volume ratio of the foamable rubber layer is 500% or more, for example, a cavity in a motor vehicle body is effectively filled, and noise-reducing performance in a vehicle interior can be improved.

When the adhesive foamable sheet is in the form of a hexahedron having a top surface, a bottom surface and four side surfaces, in particular, the superior handling properties can be exhibited, and the sheets can be closely laminated.

The adhesive foamable sheet of the present invention has an adhesive layer with increased adhesive properties. For this reason, for example, it can be prevented to drop a sheet from a steel plate for a motor vehicle body after the sheet is adhered to a hollow part of the steel plate for a motor vehicle body.

### BRIEF DESCRIPTION OF DRAWINGS

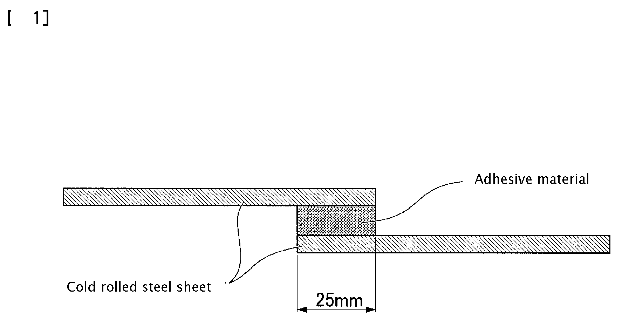

[Fig. 1] A general cross-sectional view showing a method for measuring the shear strength, used in the section of EXAMPLES.

### MODES FOR CARRYING OUT THE INVENTION

An adhesive composition of the present invention includes
100 parts by weight (mass) of an unvulcanized rubber, and
from 20 to 100 parts by weight (mass) of an adhesive hydrocarbon-based resin with a softening point of 40°C or less. Thereby, the adhesive composition of the present invention possesses both good adhesive properties and processability, and can constitute an adhesive layer in which cold-flow can be controlled.

The adhesive foamable sheet of the present invention includes
an adhesive layer including the adhesive composition of the present invention, and
a foamable rubber layer including a foaming agent, a curing agent, and an unvulcanized rubber. Thereby, in the adhesive foamable sheet of the present invention, cold-flow can be prevented or reduced. In addition, the manufacture of an adhesive layer is easy, and deterioration of adhesive properties of the adhesive layer can also be controlled.

Hereinafter, first, an adhesive composition of the present invention is described.

The adhesive composition of the present invention includes an unvulcanized rubber. The type of the unvulcanized rubber is not particularly limited, and a diene-based unvulcanized rubber is preferable.

The diene-based unvulcanized rubber can be appropriately selected from known ones and used. As the diene-based unvulcanized rubber, at least one selected from natural rubber, isoprene rubber, butadiene rubber, styrene butadiene rubber, butyl rubber, and end-denatured rubber thereof obtained by denaturing the ends of the rubbers mentioned above may be used. In view of the processability and foaming properties, styrene butadiene rubber is preferable. Such unvulcanized rubbers can be used alone or in combination of a plurality thereof.

The usage amount of the unvulcanized rubber is not particularly limited, and ranges, for example, from 10 to 90% by weight (mass), preferably ranges from 15 to 70% by weight (mass), and more preferably ranges from 20 to 50% by weight (mass), based on the total weight (mass) of the adhesive composition.

The adhesive composition of the present invention includes an adhesive hydrocarbon-based resin with a softening point of 40°C or less. As the adhesive hydrocarbon-based resin with a softening point of 40°C or less, for example, at least one selected from the group consisting of coumarone resins, aliphatic petroleum resins, aromatic petroleum resins, aliphatic/aromatic copolymerization system petroleum resins, terpene resins, rosin resins, and phenolic resins can be used. They can be used alone or in combination of two or more types thereof. In the present invention, in view of adhesive properties and processability, one or more of coumarone resins, aliphatic petroleum resins, aromatic resins, and aliphatic/aromatic copolymerization system petroleum resins are preferable.

The softening point of the adhesive hydrocarbon-based resin blended in the adhesive composition of the present invention is 40°C or less, and preferably 35°C or less, and more preferably ranges from 0 to 35°C, and particularly preferably ranges from 10 to 30°C. If the softening point exceeds 40°C, the effects of the present invention cannot be exhibited. The softening point mentioned in the present invention can be measured using the ring-and-ball method of JIS K6220-1.

The usage amount of the adhesive hydrocarbon-based resin with a softening point of 40°C or less ranges from 20 to 100 parts by weight (mass), preferably ranges from 25 to 100 parts by weight (mass), and more preferably ranges from 30 to 100 parts by weight (mass) with respect to 100 parts by weight (mass) of the unvulcanized rubber. In addition, the amount of the adhesive hydrocarbon-based resin mentioned above ranges, for example, from 3 to 50% by weight (mass), preferably ranges from 4 to 40% by weight (mass), and more preferably ranges from 5 to 30% by weight (mass), with respect to the total weight (mass) of the adhesive composition.

In addition, a tackifier resin with a softening point ranging from 70°C to 150 °C can be blended in the adhesive composition of the present invention, in addition to the components mentioned above. As the tackifier resin mentioned above, at least one hydrocarbon-based resin selected from the group consisting of coumarone resins, aliphatic petroleum resins, aromatic petroleum resins, aliphatic/aromatic copolymerization system petroleum resins, terpene resins, rosin resins, and phenolic resins, which have a softening point ranging from 70°C to 150 °C, can be used.

Various conventionally-known oils, anti-ageing agents, coloring agents, inorganic fillers, processing aids, and other additives may be used together with the adhesive composition of the present invention within a range which does not impair the effects of the present invention.

The adhesive composition of the present invention can be produced by mixing and kneading the components mentioned above by a conventionally known means such as a kneader, an internal mixer, a twin-roller kneader, or the like.

Next, an adhesive foamable sheet of the present invention is described.

The adhesive foamable sheet of the present invention includes an adhesive layer including the adhesive composition of the present invention, and a foamable rubber layer including a foaming agent, a curing agent, and an unvulcanized rubber.

The adhesive foamable sheet of the present invention has an adhesive layer at a part of or over all the parts of the surface thereof in order to obtain reliable adhesion to a steel plate for a motor vehicle body or the like. The thickness of the adhesive layer is not particularly limited, and for example, ranges from 0.1 mm to 10 mm, preferably ranges from 0.5 mm to 5 mm, and more preferably ranges from 1 mm to 3 mm.

The adhesive layer mentioned above includes the adhesive composition of the present invention. The usage amount of the adhesive composition can be appropriately determined in accordance with a degree of adhesive property to be achieved, and for example, ranges from 1 to 100% by weight (mass), preferably ranges from 80 to 99% by weight (mass), and more preferably ranges from 90 to 95% by weight (mass), based on the total weight (mass) of the adhesive layer.

The adhesive layer can be produced by, for example, using the adhesive composition of the present invention, and subjecting the adhesive composition to the publicly known molding processing such as extrusion molding, calendar rolling, press molding, or the like. Extrusion molding is preferable in view of productivity.

The adhesive foamable sheet of the present invention includes a foamable rubber layer which is foamable/curable by heating. By foaming/curing the foamable rubber layer, a cavity in a steel plate for an automobile body or the like can be filled. The thickness of the foamable rubber layer is not particularly limited, and for example, ranges from 0.1 to 10 mm, preferably ranges from 0.5 mm to 8 mm, and more preferably ranges from 1 mm to 6 mm.

The foaming agent included in the foamable rubber layer can be appropriately selected from the publicly known ones, and used. Examples thereof include azodicarbonamide (ADCA), azobisisobutyronitrile, barium azodicarboxylate, N,N'-dinitrosopentamethylenetetramine, N,N'-dimethyl-N,N'-dinitrosoterephthalamide, 4,4'-oxybis(benzenesulfonyl hydrazide), hydrazodicarbonamide, paratoluenesulfonyl hydrazide, diphenylsulfone-3,3'-disulfonyl hydrazide, allyl bis(sulfonyl hydrazide), p-toluylenesulfonyl semicarbazide, 4,4'-oxybis(benzenesulfonyl semicarbazide), sodium hydrogencarbonate, ammonium carbonate, anhydrous sodium nitrate, and the like. They can be used alone or in combination of two or more types thereof. In particular, in the present invention, azodicarbonamide is preferably used in view of safety and foaming performance.

The usage amount of the foaming agent can be appropriately determined in accordance with the physical properties of the target foamed product, such as a foaming magnification or the like. For example, the usage amount of the foaming agent ranges from 0.5% by weight (mass) to 20% by weight (mass), preferably ranges from 1% by weight (mass) to 10% by weight (mass), and more preferably ranges from 2% by weight (mass) to 5% by weight (mass), based on the total weight (mass) of the foamable rubber layer.

The foaming volume ratio of the foamable rubber layer is preferably 500% or more, more preferably 600% or more, and particularly preferably 700% or more. In the case of the foaming volume ratio which is 500% or more, when the foamable rubber layer is used for filling a cavity of an automobile body, the cavity mentioned above can be completely filled therewith.

Urea may be used as a foaming aid in order to reduce a decomposition temperature of the foaming agent.

The curing agent can be used by appropriately selecting from publicly known ones. Examples thereof can include, for example, sulfur or a sulfur-based curing agent such as a thiuram, a dithiocarbamate or the like. Examples of thiurams may include tetramethylthiuram disulfide, tetraethylthiuram disulfide, tetrabutylthiuram disulfide, tetramethylthiuram monosulfide, N,N'-dimethyl-N,N'-diphenylthiuram disulfide, dipentamethylenethiuram disulfide, dipentamethylenethiuram pentasulfide, mixed alkylthiuram disulfide and the like. Examples of dithiocarbamates may include zinc dimethylthiocarbamate, zinc diethylthiocarbamate, zinc N-ethyl-N-phenyldithiocarbamate, zinc dibenzyldithiocarbamate, and the like. They can be used alone or in combination of two or more types thereof. In particular, in the present invention, tetramethylthiuram monosulfide is preferably used in view of foaming performance.

The usage amount of the curing agent ranges, for example, from 0.5 to 5% by weight (mass), and preferably ranges from 1% by weight (mass) to 3% by weight (mass), based on the total weight (mass) of the foamable rubber layer.

A curing (vulcanizing) accelerator can also be used together with the curing agent mentioned above within a range which does not impair the effects of the present invention. As examples of the curing accelerators, mention may be made of, for example, guanidines, thiazoles, sulfenamides, dithiocarbamates, xanthates or salts thereof, aldehyde ammonias, aldehyde amines, thioureas, and the like. The aforementioned thiuram, dithiocarbamate or the like may be used as the curing accelerator. They can be used alone or in combination of two or more types thereof.

The unvulcanized rubber can be appropriately selected from the publicly known ones, and used. A diene-based unvulcanized rubber is preferable. The diene-based unvulcanized rubber can be appropriately selected from the publicly known ones, and used. As the diene-based unvulcanized rubber, at least one selected from natural rubber, isoprene rubber, butadiene rubber, styrene butadiene rubber, butyl rubber, and end-denatured rubbers thereof obtained by denaturing the ends of the rubbers mentioned above, can be used. Styrene butadiene rubber is preferable in terms of the processability and foaming properties. Such unvulcanized rubbers can be used alone or in combination of a plurality thereof.

The usage amount of the unvulcanized rubber is not particularly limited, and ranges, for example, from 10 to 90% by weight (mass), preferably ranges from 20 to 85% by weight (mass), and more preferably ranges from 30 to 80% by weight (mass), based on the total weight (mass) of the foamable rubber layer.

The unvulcanized rubber contained in the foamable rubber layer may have the type and/or composition which is different from those of the unvulcanized rubber contained in the adhesive composition for the adhesive layer, but they preferably have the same types and/or compositions.

Various oils, anti-aging agents, coloring agents, inorganic fillers, processing aids, and other additives, which are conventionally known, may be used together with the foamable rubber layer mentioned above within a range which does not impair the effects of the present invention. An adhesive may be blended in the foamable rubber layer mentioned above, but the thermosetting foamed sheet, per se, preferably does not have excessive adherence properties, and the blending amount thereof is preferably reduced.

In order to produce the foamable rubber layer, first, the thermosetting foamable composition can be generally produced by mixing and kneading the components mentioned above by means of a conventionally known method with a kneader, an internal mixer, a twin-roller kneader, or the like, in the present invention.

Next, the thermosetting foamable composition mentioned above is shaped into a sheet to form a foamable rubber layer. The foamable rubber layer can be produced by, for example, using the thermosetting foamable composition mentioned above, and subjecting the composition to the publicly known molding processing such as extrusion molding, calendar rolling, press molding, or the like. Extrusion molding is preferable in view of productivity. The molding processing is preferably carried out at a temperature of 80°C or less in order to control the development of curing, decomposition of the foaming agent or the like, although the aforementioned temperature may vary depending on the compositions.

The adhesive foamable sheet of the present invention can be produced by, for example, using a composition of forming the foamable rubber layer and a composition of forming the adhesive layer, and subjecting the compositions to the publicly known molding processing such as coextrusion molding with a die for multilayer extrusion containing two nozzles, calendar rolling for the integration by interleaving two sheets with rolls, press molding for the integration by pressing two sheets, or the like. Coextrusion molding is preferable in view of productivity. The molding processing is preferably carried out at a temperature of 80°C or less in order to control the development of curing, or the like, although the aforementioned temperature may vary depending on the formulation of the composition.

The shape of the contacting surface between the foamable rubber layer and the adhesive layer is not limited, and the cross-section thereof may be in the geometric shape formed by straight lines, curved lines, or a combination thereof.

Other layer may exist on the adhesive foamable sheet, itself, or between the foamable rubber layer and the adhesive layer, if necessary. For example, the other layer mentioned above can be formed by coextrusion molding using a die for multilayer extrusion equipped with 3 nozzles.

In the present invention, an adhesive foamable sheet of which the surface has been cured may be produced by irradiating at least a part the surface of the foamable rubber layer and the adhesive layer, with electromagnetic waves, to cure the surface mentioned above.

The foamable rubber layer and the adhesive layer mentioned above include an unvulcanized rubber having an unsaturated bond. For this reason, photopolymerization is carried out by means of electromagnetic energy at the surface, or at the neighborhoods thereof, of the foamable rubber layer and/or the adhesive layer subjected to irradiation with electromagnetic waves. Thereby, the unvulcanized rubber is thinly crosslinked and cured at the surface subjected to irradiation with electromagnetic waves, and as a result, a protective film is formed. The components of the crosslinking agent and the like in the foamable rubber layer and the adhesive layer cannot pass through the protective film. For this reason, even if the components mentioned above migrate to the surface of the sheet, bleeding out of the components mentioned above is not observed on the surface subjected to irradiation with electromagnetic waves.

As the electromagnetic waves, ultraviolet rays having a wavelength of 400 nm or less are preferably used, and ultraviolet rays having a wavelength preferably ranging from 10 nm to 400 nm, and more preferably ranging from 200 nm to 400 nm are used. As the ultraviolet rays, any one of UVB having a wavelength ranging from 280 nm to 315 nm, and UVA having a wavelength ranging from 315 nm to 400 nm can be used.

An electromagnetic wave source is not particularly limited, and any optical source can be used. As the optical source, an ultraviolet optical source is preferable. As the ultraviolet optical source, any ultraviolet optical source such as an ultraviolet laser, an ultraviolet lamp such as a xenon lamp, an ultraviolet emission LED or the like can be used. In addition, an optical source including ultraviolet rays can also be used, and a fluorescent lamp or solar light can also be utilized. As the optical source, for example, an optical source having irradiation intensity ranging from 60 to 300 kJ/m² per hour can be used, and one having irradiation intensity ranging from 90 to 250 kJ/m² per hour can be preferably used.

The irradiance level of the electromagnetic waves is not particularly limited as long as the surface of the foamable rubber layer and/or the adhesive layer which has been irradiated with electromagnetic waves is cured. Therefore, the wavelength of the electromagnetic waves, the level of the electromagnetic waves, and irradiation period of the electromagnetic waves can be appropriately adjusted under the conditions of curing the surface which the electromagnetic waves irradiate.

In the adhesive foamable sheet of which the surface has been cured, a crosslinked and cured film is formed on the surface thereof by means of irradiation with electromagnetic waves, and preferably irradiation with ultraviolet rays, without heating the foamable sheet mentioned above. For this reason, the sheet mentioned above is not foamed. Therefore, the adhesive foamable sheet of the present invention is unfoamed as it is. For example, the unfoamed adhesive foamable sheets of the present invention are inserted into the cavities of motor vehicle bodies as an unfoamable material, and subsequently, heated and foamed for use in filling the cavities mentioned above.

The shape of the adhesive foamable sheet of the present invention is not particularly limited, and is preferably a hexahedron having a top surface, a bottom surface and four side surfaces, and the electromagnetic waves irradiate the aforementioned top surface. In this case, the irradiation with the electromagnetic waves is preferably carried out at the top surface, at least one of the side surfaces, and/or the bottom surface mentioned above. In the case of carrying out irradiation with electromagnetic waves to the side surface(s), electromagnetic waves preferably irradiate as many as possible side surfaces, and preferably irradiate all four side surfaces.

In the case of the adhesive foamable sheet of the present invention being in the form of a hexahedron, the sheet is preferably in the form of a general cuboid, and is more preferably in the form of a thin plate. In the case of the adhesive foamable sheet of the present invention being in the form of a thin plate, irradiation with electromagnetic waves may be omitted for the side surface(s), but electromagnetic waves preferably irradiate at least the top surface. The thickness of the sheet in the case of the adhesive foamable sheet of the present invention being in the form of a thin plate is not particularly limited. The thickness ranges, for example, from 1 mm to 20 mm, preferably ranges from 2 mm to 10 mm, and more preferably ranges from 3 mm to 5 mm.

### INDUSTRIAL APPLICABILITY

The adhesive composition of the present invention has both good adhesive properties and processability, and can form an adhesive layer in which cold-flow is controlled. Therefore, the adhesive layer having increased adhesive properties and being applicable to various usages can be easily produced.

In addition, in the adhesive foamable sheet of the present invention, cold-flow can be controlled. Therefore, even if the adhesive foamable sheets are left in a stacked manner for a long period of time, it can be prevented or reduced that the adhesive in the adhesive layers may be protruded from the side surfaces of the thermosetting foamable sheets due to weight bearing from the upper side, resulting in the integration of the sheets with the adjacent sheets or the adhesion of the sheets to the package container, and thereby, the handling properties may be degraded. In the case of carrying out irradiation with electromagnetic waves at the foamable rubber layer, operability can be improved without impairing adhesiveness with respect to motor vehicle bodies and the like, as well as, without impairing foaming properties which correspond to the primary performance of a thermosetting foamable sheet.

The thermosetting foamable sheet of the present invention forms a foamed material exhibiting an acoustic absorption effect by, for example, adhering the sheet to an interior wall of a hollow part such as a cavity inner part of steel plates of a motor vehicle body, and subsequently, foaming and curing the sheet by appropriately heating it. Thereby, a noise-reducing property in an interior space of a motor vehicle can be enhanced. Therefore, the thermosetting foamable sheet of the present invention can be used as a cavity filler for a motor vehicle body.

### EXAMPLES

Hereinafter, the present invention is described in detail on the basis of Examples and Comparative Examples. It should be understood that the present invention is not limited to these Examples.

### Examples 1 to 4 and Comparative Examples 1 to 4

The components shown in Table 1 described below were mixed and kneaded by means of an open kneader to prepare an adhesive composition (the numerical values shown in Table 1 are based on parts by weight (mass) with respect to 100 parts by weight (mass) of a rubber). The obtained adhesive composition was pressed by means of an oil hydraulic press, and an unvulcanized sheet having a thickness of 2 mm was produced.

### Penetration

The unvulcanized sheet mentioned above of each of Examples 1 to 4 and Comparative Examples 1 to 4 was cut into pieces, each having 50 mm length by 30 mm width. 10 pieces were stacked to prepare a test sample having a thickness of 20 mm. Penetration of the obtained test sample was measured by means of a method in accordance with JIS K2207. As the numerical value of penetration increases, the test sample is softer and better processability is exhibited. The results are also shown in Table 1.

### Shear strength

The unvulcanized sheet (adhesive material) mentioned above of each of Examples 1 to 4 and Comparative Examples 1 to 4 was cut into a test piece having 25 mm square. The test piece was placed between two cold rolled steels of 100 mm length by 25 mm width with 0.8 mm thickness, as shown in Fig. 1. Shear strength was measured at a tension speed of 300 mm/min by pulling the steels in the direction of 180 degrees (horizontal directions of Fig. 1) after exerting weight of 2 kg for 5 seconds to crimp the test piece. The index was obtained by setting the tensile shear strength of Comparative Example 1 to 100. As the index increases, better adhesive performance is obtained. The results are also shown in Table 1.

### Thickness retention ratio

The unvulcanized sheet mentioned above of each of Examples 1 to 4 and Comparative Examples 1 to 4 was cut into pieces, each having 50 mm length by 30 cm width. 10 pieces were stacked to prepare a test sample having a thickness of 20 mm. The obtained test sample was stored for 72 hours at room temperature, and subsequently, the thickness of the sample was measured. The thickness retention ratio was calculated as a ratio of the thickness after storage for 72 hours with respect to the initial thickness. As the thickness retention ratio increases, prevention or reduction of cold-flow is enhanced. The results are also shown in Table 1.

**Table 1**

| | Example 1 | Example 2 | Example 3 | Example 4 | Comparative Example 1 | Comparative Example 2 | Comparative Example 3 | Comparative Example 4 |
|---|---|---|---|---|---|---|---|---|
| Butadiene rubber | 100 | 100 | 100 | 100 | 100 | 100 | 100 | 100 |
| Process oil | 37.5 | 25 | - | - | 75 | 75 | 35 | 62.5 |
| Resin A (Softening point: 90°C) | 35 | 35 | 35 | 35 | 35 | 35 | 75 | 35 |
| Resin B (Softening point: 30°C) | 37.5 | 50 | 75 | - | - | - | - | - |
| Resin C (Softening point: 10°C) | - | - | - | 75 | - | - | - | - |
| Inorganic filler | 250 | 250 | 250 | 250 | 250 | 300 | 250 | 250 |
| Carbon black | 0.5 | 0.5 | 0.5 | 0.5 | 0.5 | 0.5 | 0.5 | 0.5 |
| Zinc oxide | 10 | 10 | 10 | 10 | 10 | 10 | 10 | 10 |
| Curing agent | 2.5 | 2.5 | 2.5 | 2.5 | 2.5 | 2.5 | 2.5 | 2.5 |
| Foaming agent | 2 | 2 | 2 | 2 | 2 | 2 | 2 | 2 |
| Penetration | 61 | 61 | 62 | 63 | 62 | 53 | 56 | 63 |
| Shear strength (Index) | 104 | 106 | 108 | 107 | 100 | 85 | 90 | 102 |
| Thickness retention ratio (%) | 82 | 87 | 88 | 90 | 70 | 90 | 92 | 72 |

| | | | | | | | | |
|---|---|---|---|---|---|---|---|---|
| Resin A (Softening point: 90°C): Hydrocarbon resin TT90, manufactured by Rutgers Chemicals AG Resin B (Softening point: 30°C): Hydrocarbon resin TT30, manufactured by Rutgers Chemicals AG Resin C (Softening point: 10°C): Coumarone resin G10, manufactured by Rutgers Chemicals AG | | | | | | | | |

As is clear from Table 1, Comparative Examples 2 and 3 had the better thickness retention ratios as compared with Comparative Example 1, but had reduced penetration, and failed to exhibit good processability. In addition, improvement in shear strength could not be observed. Comparative Example 4 had good penetration and good shear strength, but large improvement in thickness retention ratio could not be observed. On the other hand, in Examples 1 to 4, both good penetration and good shear strength were exhibited, and improvement in thickness retention ratio was observed.

## Claims

1. An adhesive composition, comprising:
100 parts by weight of an unvulcanized rubber; and
from 20 to 100 parts by weight of an adhesive hydrocarbon-based resin with a softening point of 40°C or less.

2. The adhesive composition according to Claim 1, wherein the adhesive hydrocarbon-based resin comprises at least one selected from the group consisting of coumarone resins, aliphatic petroleum resins, aromatic petroleum resins, aliphatic/aromatic copolymerization system petroleum resins, terpene resins, rosin resins, and phenolic resins.

3. The adhesive composition according to Claim 1 or 2, wherein the unvulcanized rubber is selected from the group consisting of natural rubber, isoprene rubber, butadiene rubber, styrene butadiene rubber, butyl rubber, and end-denatured rubbers thereof obtained by denaturing the ends of the rubbers mentioned above.

4. An adhesive foamable sheet comprising:
an adhesive layer comprising the adhesive composition as recited in any one of Claims 1 to 3; and
a foamable rubber layer comprising a foaming agent, a curing agent, and an unvulcanized rubber.

5. The adhesive foamable sheet according to Claim 4, wherein the foaming volume ratio of the foamable rubber layer is 500% or more.

6. The adhesive foamable sheet according to Claim 4 or 5, wherein the foaming agent is selected from the group consisting of azodicarbonamide, azobisisobutyronitrile, barium azodicarboxylate, N,N'-dinitrosopentamethylenetetramine, N,N'-dimethyl-N,N'-dinitrosoterephthalamide, 4,4'-oxybis(benzenesulfonyl hydrazide), hydrazodicarbonamide, paratoluenesulfonyl hydrazide, diphenylsulfone-3,3'-disulfonyl hydrazide, allyl bis(sulfonyl hydrazide), p-toluylenesulfonyl semicarbazide, 4,4'-oxybis(benzenesulfonyl semicarbazide), sodium hydrogencarbonate, ammonium carbonate, and anhydrous sodium nitrate.

7. The adhesive foamable sheet according to any one of Claims 4 to 6, wherein the curing agent is sulfur or a sulfur-based curing agent.

8. The adhesive foamable sheet according to any one of Claims 4 to 7, wherein the unvulcanized rubber is selected from the group consisting of natural rubber, isoprene rubber, butadiene rubber, styrene butadiene rubber, butyl rubber, and end-denatured rubbers thereof obtained by denaturing the ends of the rubbers mentioned above.

9. The adhesive foamable sheet according to any one of Claims 4 to 8, wherein the sheet is in the form of a hexahedron having a top surface, a bottom surface and four side surfaces.
